# EUROPEAN PATENT SPECIFICATION

(11) **EP 1 256 239 B1**
(45) Date of publication and mention of the grant of the patent: **10.03.2010**
(21) Application number: 01920106.0
(22) Date of filing: 24.01.2001
(51) Int. Cl.: H04L 12/24

(54) **NETWORK MANAGEMENT SYSTEM AND METHOD FOR PROVIDING COMMUNICATION SERVICES**
NETZWERKVERWALTUNGSSYSTEM UND VERFAHREN ZUM BEREITSTELLEN VON KOMMUNIKATIONSDIENSTEN
SYSTÈMES DE GESTION DE RÉSEAUX ET PROCÉDÉ POUR FOURNIR DES SERVICES DE COMMUNICATIONS

(30) Priority: 24.01.2000 US 177625 P
(43) Date of publication of application: 13.11.2002
(73) Proprietor: Broadwing Corporation, Austin, TX 78746-6426 (US)
(72) Inventor: TADMOR, Gil, Corvis Corporation, Columbia, MD 21046-9400 (US); BROADFOOT, William, Scott, Corvis Corporation, Columbia, MD 21046-9400 (US); LAZAR, Sashi, Corvis Corporation, Columbia, MD 21046-9400 (US)
(74) Representative: Texier, Christian
(86) International application number: PCT/US2001/002320
(87) International publication number: WO 2001/054425

(56) References cited:
- US-A- 5 905 715
- P.GUSTAFSSON: "Telecom Network Managemant" 19 October 1999 (1999-10-19) , CEI-EUROPE , BARCELONA (SPAIN) XP002175855 page 8
- INTERNATIONAL TELECOMMUNICATION UNION: "Principles for a Telecommunications management network" ITU-T SERIES M: MAINTENANCE, no. M.3010, May 1996 (1996-05), XP017402170 Geneva, CH
- SANCHEZ J. ET AL: 'Qsn: a model to the network-service interface' NETWORK OPERATIONS AND MANAGEMENT SYMPOSIUM, 1998. NOMS 98., IEEE NEW ORLEANS, LA, USA 15 February 1998 - 20 February 1998, NEW YORK, NY, USA, pages 288 - 291, XP010267383

## Description

### BACKGROUND OF THE INVENTION

The present invention is directed generally to network management systems ("NMS") and optical systems including network management systems. More particularly, the invention relates to network management systems for the control and operation of optical systems and optical components, such as amplifiers, transmitters, receivers, switches, add/drop multiplexers, filters, etc., and the optical links and networks comprising the systems.

Fiber optic transmission systems generally involve numerous optical links that are arranged in point to point, ring, mesh, or other configurations which are interconnected to provide communication services over a geographic region. Each of the various links must be managed and operated to ensure the proper flow of communications traffic within the link. The interconnection of the various links requires additional management oversight and control to ensure the smooth flow of communications traffic between the various transmission links in the system.

Some publications are addressing the topic of network management;

INTERNATIONAL COMMUNICATION UNION: "Principles for a telecommunications management network" ITU-T SERIES M: LAINTENANCE N° M.3010, May 1996 (1996-05), XP017402170 Geneva, CH. presents the basic rules for a telecommunications management network.

SANCHEZ J ET AL: "Qsn: a model to the network-service interface" NETWORK OPERATIONS AND MANAGEMENT SYMPOSION, 1998. NOMS 98., IEEE NEW ORLEANS, LA, USA, 15 February 1998 (1998-02-15), -20 February 1998 (1998-02-20) pages 288-291, XP010267383 New York, NY, USA. presents an information model for the interface between a telecommunication network and service layers.

As used herein, communications traffic should be interpreted in its broadest sense to include audio, video, data, and other forms of information that can be transferred. Likewise, the term "system" should be broadly construed to include a single linear link consisting of an optical transmitter and an optical receiver, as well as optical networks including multiple links and pluralities of diversely located transmitters and receivers that are interconnected by various transmission media, such as one or more optical fibers, and various optical components, such as optical switches, amplifiers, add/drop devices, filters, equalizers, etc.

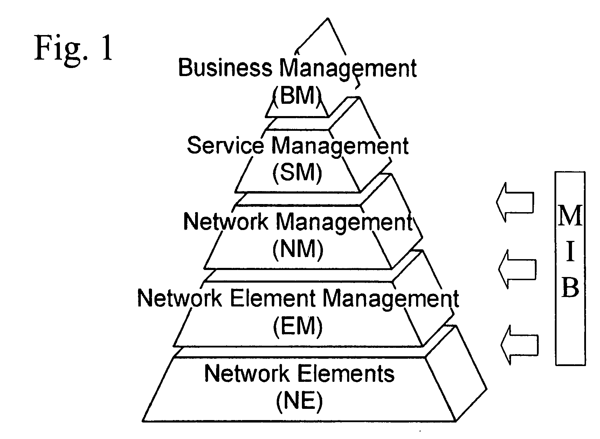

The necessity of simultaneously managing the individual network elements, links, and networks of links has led to the development of standardized hierarchical approaches to optical network management. One such standardized structure, known as the Telecommunication Management Network ("TMN") structure, allocates the management responsibilities over number of management levels, as generally shown in Fig. 1. See ITU M.3010.

In the TMN structure, a Network Management Layer performs provisioning, monitoring and control functions on a network basis. High level network tasks, such as provisioning network connectivity and network monitoring are performed through the network management layer. Communications service providers use a Service Management Layer to provide network configurations to the network management layer that are necessary to provision, track, and bill for requested services in existing network. A Business Management Layer provided to oversee the network utilization provided by the service management layer and to plan future network configurations and strategies.

The TMN structure separates the actual network management functions into two layers. The network management layer provides a high level view of the network and receives high-level network configuration instructions from the service management layer and develops a general set of element instructions necessary to provision the network configuration accordingly. The network management layer sends the general element instructions to an Element Management Layer ("EML"), in which a plurality of element managers are typically used to oversee network element functions performed in the Network Element Layer. The network element layer includes the optical and electrical components and associated hardware that comprise the actual transmission system and which are generally referred to as network elements. Each network element generally includes a network element controller that controls the operation of the element in accordance with the specific element instructions from the element manager.

Communication between the various TMN layers generally follows established protocols, such as CMIP (Common Management Information Protocol), Q3, SNMP (Simple Network Management Protocol), CORBA (Common Object Request Broker Architecture), etc. The network and element managers and the component controllers generally are configured according to protocols, such as GDMO (Guideline for Definition of Managed Objects) and its derivatives, as well as other standard protocols. Whereas communication within or between network elements typically involves proprietary protocols that are particular to the optical system.

In the operation of the optical system, element managers are generally assigned to one or more network elements in the network. The network manager sends the general element instructions to the element managers. Each element manager generates specific element instructions for its managed network elements from the general element instructions. The specific network element instructions can be distributed directly to network elements via a data communication network, such as a local, metropolitan, or wide area network (LAN, MAN, or WAN, respectively), which may be external to the optical system. Alternatively, specific network element instructions can be distributed remotely via other network elements by employing a dedicated supervisory or service channel that provides communication between the network elements within the network element layer.

The network element controllers not only receive and process the specific element instructions, but also control all work functions performed in the component including those performed by sub-component peripherals, or sub-elements, such as pumps, heaters, coolers, current sources, etc. The network element controller also monitors subelement performance and provides status information to the element manager for higher level and/or redundant analysis and monitoring.

In many systems, the operation of the network element and sub-elements are controlled with reference to one or more Management Information Bases (MIBs). The MIBs provide operational parameters for controllable portions of the network element as a function of monitored operating characteristics of the network elements. The network element controller monitors the operating characteristics and controls the operation of the network element and its sub-elements in accordance with its associated MIBs.

The element managers monitor the performance of the network elements for compliance with the general element instructions and generate element status reports on the network element status. The network manager monitors the element status reports from the element managers to ensure overall compliance with the network instructions and provides network status reports to the service manager.

Conventional network management systems are designed to oversee point to point optical links, which are essentially independent optical systems that are electrically connected at the system end-points in various architectures. The use of optical amplifiers has allowed each point to point system to be extended over a longer distance, but each link is nonetheless independently operated. As such, network management systems used in optical systems are often limited to fault management and control of the optical components and electronic configurations of plural interconnected linear systems.

It is now more widely recognized that optical systems must evolve from independent, point to point, serial links to multi-dimensional, unified optical networks to satisfy the growing demand for communications capacity. The ability to provide high capacity systems requires both improved optical component systems and NMS to control the component systems. Present optical component systems and NMS can not be scaled easily from one dimensional, independent systems to multi-dimensional, unified systems. In view of the changing requirements of optical component systems, it is necessary that NMS be developed to allow the deployment of robust, multi-dimensional optical systems.

### BRIEF SUMMARY OF THE INVENTION

The present invention addresses the need for network management systems and methods for transmission systems. Network management systems of the present invention includes a network service layer that provides for integrated wavelength and network configuration planning and implementation to allow the provisioning of existing and evolving multi-dimensional optical networks. The network service layer consolidates responsibilities for planning, coordinating, and allocating current and future network resources. This consolidation allows the service management layer and business management layer functions to focus on the coordination and optimization of multiple networks and services under control of the service providers.

The NS managers in the network service layer can receive communication service requests for the network from the service management layer or other networks. The NS performs wavelength and communication path planning and network configuration for the portion of the network under their control to provide the requested service. The planning and configuration demands can be provided either directly or indirectly to the network management layer. Instructions to provision the network elements to provide the requested service are provided to the network elements, either directly or via one or more element managers.

In various embodiments, the element management layer includes multiple element managers that interface with one or more network elements via the optical system, thereby providing network communication redundancy. In these embodiments, network elements can be characterized as network element nodes that communicate directly with the element managers and/or remote network elements that communicate with the element manager via one or more other network elements.

In various embodiments, the optical system can include at least one channel that can be dropped and added at remote network elements, as well as node network elements, to allow access to the network at every network element or at certain designated network elements. Using these channels, network element nodes also can be accessed analogous remote network elements via other network element nodes, if the direct communication between the network element node and its corresponding element manager is unavailable. In addition, multiple communication paths between the network elements and one or more element managers can be provided in case of a failure. Similarly, the network manager can be configured to bypass a failed element manager by communicating with the network elements via other element managers and the optical system.

In the present invention, it is not necessary that public IP addresses be used for remote network elements. The use of public IP addresses can be allocated to those network element nodes where direct communication with the element manager and/or network manager is desired. Network elements that do not have public IP addresses can be assigned internal optical system addresses that are included in the messages sent to the public IP address nodes. The internal optical system address can be used by the network element node to forward instructions to the appropriate network element. In various embodiments, public IP addresses can be included in the internal addressing system to allow the network management system to bypass failed element managers and network element nodes and reach other network elements or to provide redundancy.

In this manner, the network management system of the present invention provides the increased system functionality required to enable the deployment of high performance optical systems. These advantages and others will become apparent from the following detailed description.

The invention is defined in a network management system according to claim 1 and a communication services providing method according to claim 10. Preferred embodiments thereof are defined in the respective dependent claims.

### BRIEF DESCRIPTION OF THE DRAWINGS

Embodiments of the present invention will now be described, by way of example only, with reference to the accompanying drawings for the purpose of illustrating embodiments only and not for purposes of limiting the same; wherein like members bear like reference numerals and:
Fig. 1 shows the standard Telecommunications Management Network hierarchical structure;
Figs. 2a and 2b show embodiments of an optical system according to the present invention;
Fig. 3a-3d are schematic representations of several embodiments of Telecommunications Management Network hierarchical structures used in the present invention; and
Fig. 4 shows a partial network management and optical system embodiment.

### DESCRIPTION OF THE INVENTION

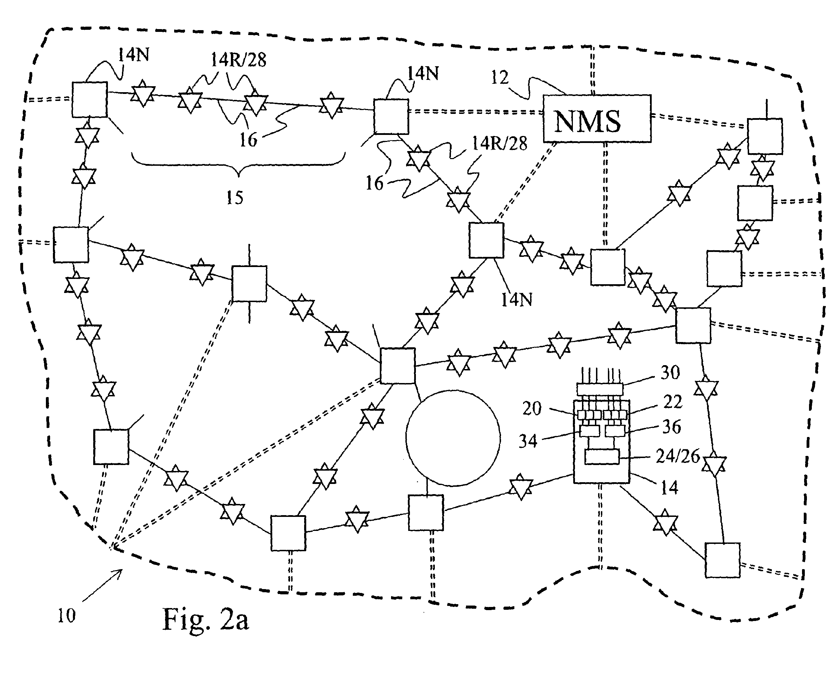

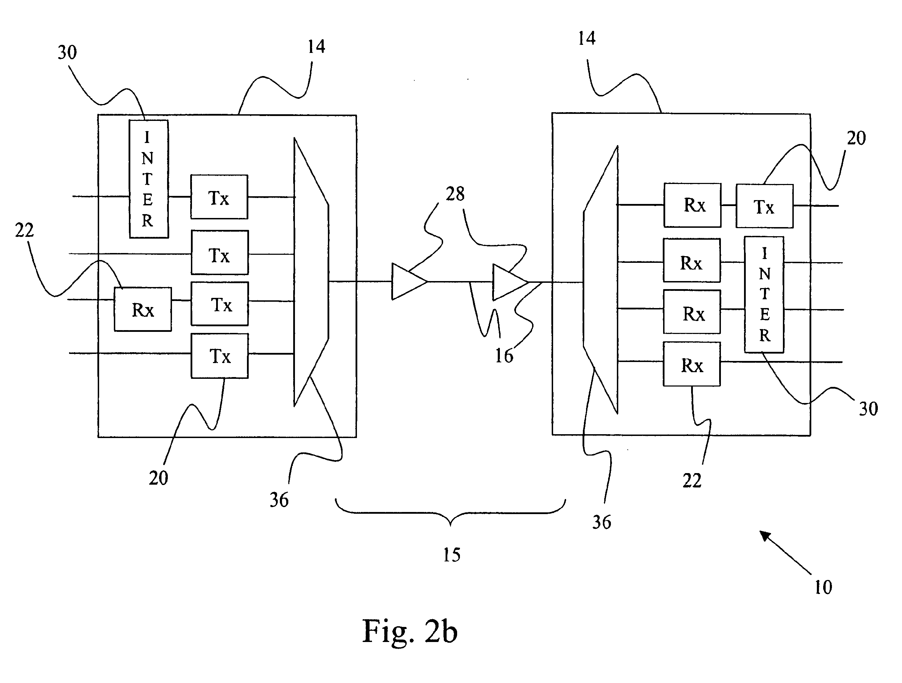

Fig. 2a shows an optical system 10 of the present invention, which includes a network management system ("NMS") 12 to manage, configure and control network elements 14 in the system 10. The system 10 is illustrated as a multi-dimensional network, although advantages of the present invention may be realized with other system 10 configurations, such as a point to point configuration shown in Fig. 2b. Also, the system 10 can employ various architectures, such as mesh or rings, depending upon the network requirements. Various transmission schemes, such as space, time, code, frequency, and/or wavelength division multiplexing, etc. can be used in the system 10.

The NMS 12 can include multiple management layers that can be directly and indirectly connected to the network elements 14. In the illustrated embodiment, the network elements 14 can be characterized as network element nodes 14N, which are directly connected to the NMS 12, and remote network elements 14R, which communicate to the NMS 12 indirectly via a network element node 14N. For example, the NMS 12 may be directly connected to some network elements 14 via a data communication network (shown in broken lines) and indirectly connected to other network elements 14 via the optical system 10. The data communication network can be a dedicated wide area network, a shared network, or a combination thereof. A wide area network utilizing a shared network can utilize, for example, dial-up connections to the network elements 14 through a public telephone system.

Various guided and unguided media, such as one or more optical fibers, can be used to interconnect the network elements 14 establishing links 15 between the network element nodes 14N and providing optical communication paths 16 through the system 10. The transmission media in each path 16 can carry one or more uni- or bi-directionally propagating optical signal channels, or wavelengths, depending upon the system 10. The optical signal channels in a particular path 16 can be treated individually or as a single group, or can be organized into and treated as two or more wavebands or spectral groups, each containing one or more optical signal channels.

The network elements 14 can include one or more signal processing devices including one or more of various optical and/or electrical components. The network elements 14 can perform network functions or processes, such as switching, routing, amplifying, multiplexing, and demultiplexing of optical signal channels. For example, network elements 14 can include transmitters 20, receivers 22, optical switches 24, add/drop multiplexers 26, amplifiers 28, and interfacial devices 30, as well as multiplexers, demultiplexers, filters, dispersion compensating devices, monitors, and the like. Various combinations of optical switching devices 24, transmitters 20, and receivers 22 can be included in the network element 14 depending upon the desired functionality in the network element 14. For example, in WDM embodiments, the network element 14 can include one or more optical transmitters 20 and optical receivers 22 along with multiplexers, demultiplexers, and other associated components, as well as optical switching devices 24 or add/drop devices.

The optical transmitters 20 and optical receivers 22 are configured respectively to transmit and receive optical signals including one or more information carrying optical signal wavelengths, or channels, λᵢ via the communication paths 16. The transmitters 20 will generally include a narrow bandwidth laser optical source that provides an optical carrier. The transmitters 22 also can include other coherent narrow or broad band sources, such as sliced spectrum sources, as well as suitable incoherent optical sources, such as fiber lasers, etc., as appropriate. Information can be imparted to the optical carrier either by directly modulating the optical source or by externally modulating the optical carrier emitted by the source. Alternatively, the information can be imparted to an electrical carrier that can be upconverted onto an optical wavelength to produce the optical signal. Similarly, the optical receiver 22 can include various detection techniques, such coherent detection, optical filtering and direct detection, and combinations thereof. Employing tunable transmitters 20 and receivers 22 in the optical nodes 14 can provide additional versatility in the system 10.

The optical amplifiers 28 can be deployed proximate to other optical components to provide gain to overcome component losses, as well as along the optical communication paths 16 to overcome fiber attenuation. The optical amplifiers 28 can include doped (e.g. erbium) and Raman fiber amplifiers that can be locally or remotely pumped with optical energy, as well as semiconductor amplifiers. The optical amplifiers 28 include one or more stage of concentrated/lumped amplifiers at discrete network element 14 and/or doped and Raman fiber amplifiers 28 distributed as part of the transmission fiber 16.

The interfacial devices 30 may include, for example, electrical and optical/electrical cross-connect switches, IP routers, etc., to provide interface flexibility within, and at the periphery of, the optical system 10. The interfacial devices 30 can be configured to receive, convert, and provide information in one or more various protocols, encoding schemes, and bit rates to the transmitters 20, and perform the converse function for the receivers 22. The interfacial devices 30 also can be used to provide protection switching in various nodes 14 depending upon the configuration.

Optical combiners 34 can be used to combine the multiple signal channels into WDM optical signals for the transmitters 20. Likewise, optical distributors 36 can be provided to distribute the optical signal to the receivers 22. The optical combiners 34 and distributors 36 can include various multi-port devices, such as wavelength selective and non-selective ("passive"), fiber and free space devices, as well as polarization sensitive devices. For example, circulators, passive, WDM, and polarization couplers/splitters, dichroic devices, prisms, diffraction gratings, arrayed waveguides, etc. can be used alone or in various combinations with various tunable or fixed wavelength transmissive or reflective, narrow or broad band filters, such as Bragg gratings, Fabry-Perot and dichroic filters, etc. in the optical combiners 34 and distributors 36. Furthermore, the combiners 34 and distributors 36 can include one or more stages incorporating various multi-port device and filter combinations to multiplex, demultiplex, and/or broadcast signal wavelengths λᵢ in the optical systems 10.

Fig. 2b shows a system 10 including a link 15 of four network elements 14. That system 10 may be all or part of a point to point system 10, or it may be part of a multi-dimensional system 10 like the example illustrated in Fig. 2a. One or more of the network elements 14 can be connected directly to the network management system 12. If the system 10 illustrated in Fig. 2b is part of a larger system 10, then as few as none of the network elements 14 can be connected to the network management system 12 and all of the network elements 14 can still be indirectly connected to the NMS 12 via another network element not shown.

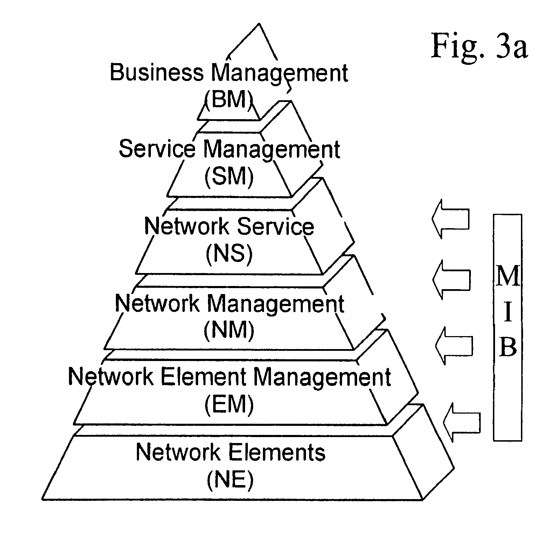

As shown in Fig. 3a, the NMS of the present invention include a Network Services ("NS") layer. The NS layer can be deployed in various manners ranging from a fully centralized to a fully distributed manager of network services that communicates with the business, service, network, and element management layers. In one embodiment, the NS layer can be implemented via a software application running on a workstation as a centralized manager, which communicates with the other layers via LAN, WAN, or other network depending upon whether the other management layers are operating locally or remotely. The business, service, network, and element management layers can be operated from platforms analogous to prior NMS architecture; however, the functionality will be modified to accommodate the new hierarchy. For example, network and element management layers of the present invention can be deployed on various commercial software platforms, such as Sun Solstice Enterprise Manager from Sun Microsystems, and Web NMS from AdventNet Inc.

In network element layer, the network elements 14 may include one or more network element/optical component controllers that oversee and control the operation of the NE. Alternatively, the network element can be provisioned such that the actual operation and control network element 14 in the system 10 is distributed among autonomous subelement/work function controllers in the network element 14. The autonomous work function controllers provide dedicated control over one or more assigned work functions being performed in the network element 14. The delegation of work function control allows the network element controllers to oversee the work function, and possibly provide direct work function control, if a work function controller malfunctions. A description of NMS employing hierarchical work function control is provided in commonly assigned U.S. Patents 6 359 729 and 6 504 646. The network element controllers can be any microprocessor suitable for performing the monitoring and control functions for the network element 14, such as a Motorola 860 microprocessor.

The network service layer performs integrated wavelength and network configuration planning and implementation to allow the provisioning of existing and evolving multi-dimensional optical networks. The network service layer integrates future network planning and implementation functions of the business management layer with the existing network planning, implementation, analysis, and reconfiguration functions performed by the service management layer and network management layer. The network services layer provides integration between existing and future wavelength and network configuration planning and implementation provides the necessary capability to manage multi-dimensional, unified networks.

The network service layer can maintain or retrieve network resources from the network management layer, such as the current configuration of the network, an inventory of available and unavailable network elements, wavelengths, and communication path resources. The network service layer determines whether requested services can be provisioned given the available network resources. If the requested services can be provisioned from available resources, the network service layer can provide the new network configuration to the business management layer or service management layer, which can request the network management layer to provision the network accordingly. The network service layer also can provide the new network configuration directly to the network management layer, where it can be provisioned upon receipt or request by the service management layer or business management layer.

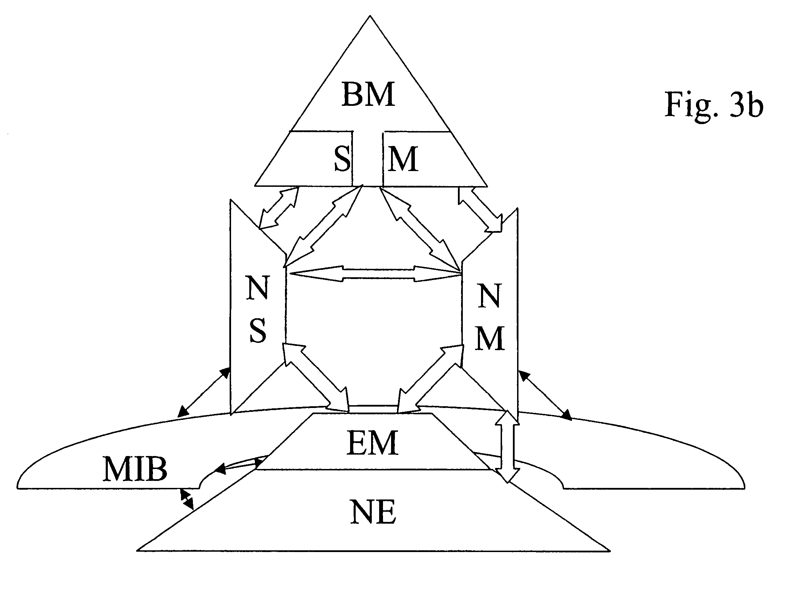

Fig. 3b provides another illustration of the network management hierarchical of Fig. 3a, but more adequately represents the interrelation of the management functions in the present invention. For example, the business and/or service management layers can request services and, if the requested services can not be provisioned from available resources, the network service layer can notify the requesting layer of the resource shortfall. The network service layer can also provide network reconfiguration plans using all, or a portion of, the existing network resources to satisfy the current provisioned services and the requested services. Given the network reconfiguration plans, the service management layer and/or business management layer can modify its current services to provide a smooth migration to the new configuration.

In another example, when a new network is being planned, the network service layer can be provided with an expected traffic pattern via the business management layer and/or service management layer. The network service layer performs wavelength and communications path planning and provides one or more network configurations along with network element requirements to provision the traffic pattern in the network. The network and wavelength planning can be performed in multiple steps based on current and forward looking traffic plans to smoothly accommodate the provisioning of additional capacity in the network.

In another example, when additional traffic is being added to an existing network, the network service layer provides an allocation of available, existing network resources and/or additional network element requirements to provision the additional traffic. The network service layer also can be used to identify new communication paths 16, to expand existing networks along with the required network elements 14. Again, the network service layer can be employed regularly to develop network reconfiguration strategies to effectively prepare for increased traffic demands. For example, the service management layer can request the network service layer to reconfigure the existing network to more efficiently utilize the existing network resources.

The network service layer can also provide for wavelength and network configuration planning and provisioning using various network architecture rules. For example, traffic volumes along various routes can be maximized to exploit particular network configurations. Conversely, the traffic volumes over given routes can be averaged as much as possible to provide for more uniform growth in capacity requirements over time or to accommodate periodic fluctuations in capacity demand in the network. Wavelength planning can take into consideration issues, such as wavelength contention and reuse, network efficiency and bandwidth management. An example of network service layer embodiments that can be used in the present invention are described in WO 01/15368.

In addition, the service management layer can direct the network management layer and network element management layer to extract various performance characteristics from the network for performance monitoring of the network. The service management layer can use the performance characteristics to evaluate and provide trend analysis of the network. For example, the optical signal to noise ratio ("OSNR") monitoring at the destination receivers can identify degradation in the network resources. OSNR monitoring can be performed at remote network element 14R, in addition to node network element 14N, by employing fixed and/or tunable receivers at amplifier sites, as well as other remote network elements 14R. Remote network element 14R monitoring can be used to more precisely identify sources of degradation. The service management layer and/or the business management layer can provide supplemental architecture rules to the network service layer that are developed based on the performance characteristics of the operating network.

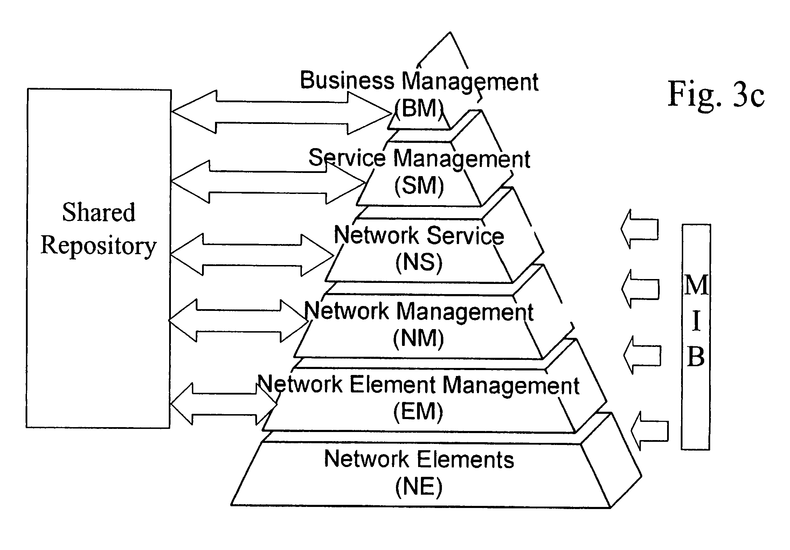

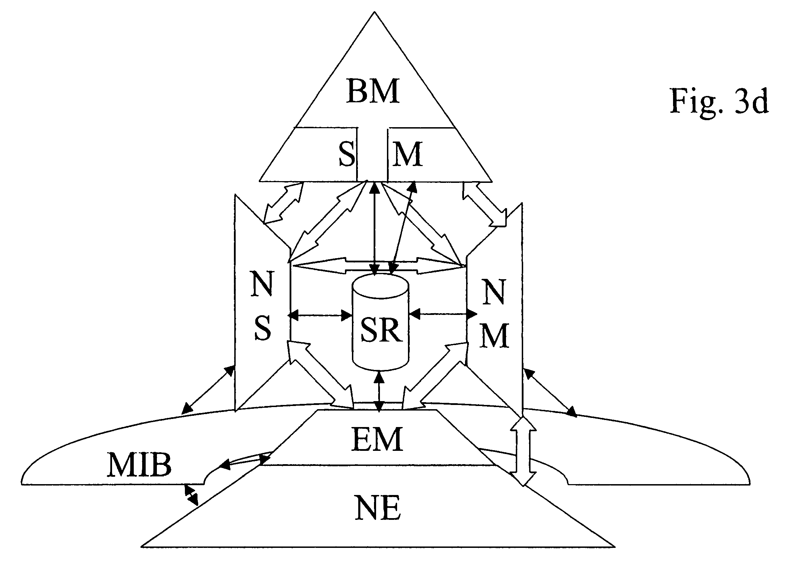

Figs. 3c and 3d are analogous to Figs. 3a and 3b and illustrate a shared repository. The shared repository can be directly accessed, in whole or in part, by two or more of the management layers. In the illustrated embodiments, the shared repository can be directly accessed by the business management layer, service management layer, network service layer, network management layer, and network element management layer. While the information contained in the shared repository can be shared among two or more layers, it is not necessary that the shared repository be fully centralized. The shared repository can be a partially or fully distributed repository. Distributed repositories can retain the benefits of shared repositories for lower speed tasks, while providing high speed access necessary for some management tasks. For example, alarm indication and fault management tasks being performed by the network element management layer may require high speed access to gain information to take corrective actions. Conversely, lower speed access may be appropriate for service management layer reviews of available network resources and service planning.

The various management layers can be provided with direct access to the location of information within the distributed repository system. Alternatively, the shared repository can include a shared repository layer to centralize at least some of the requests for information from the TMN layers. The repository layer can provide a direct link to the information in the distributed repositories or can retrieve and provide information to the requesting layer.

Furthermore, information provided to other management layers need not be physically passed through the interfaces to the other layers, but can be provided to the shared repository for access at a later time by another layer. The management layer from which the information was requested merely sends a notice to the requesting management layer indicating the requested information is available in the shared repository. The requesting layer can then accesses and processes the information directly from the shared repository. The consolidation of management functions and flexibility imparted by the network management system 12 can allow the operation of the NMS 12 to be streamlined and operated with greater efficiency and flexibility.

For example, if a service provider wants to request that new services be provisioned, the service management layer can query the shared repository to review an inventory of network resources available for provisioning the new services. The shared repository can contain the available network resources and the date and time that the inventory was performed. If the inventory is older than desired, the service management layer can request that the network management layer update the inventory of available network resources. The network management layer can conduct an inventory of the network resources, either directly or via the network element management layer, and update the inventory in the shared repository layer. Upon completion of the inventory, the network management layer can notify the service management layer of the updated inventory. The service management layer can then request the network service layer determine wavelengths and communication paths through the network that can be used to provision the requested services.

The network service layer can process the necessary network resource information from the shared repository. If sufficient network resources are available to provision the requested services, the network service layer can provide the network element configuration information to the shared repository and notify the service management layer of the presence of the requested service configuration in the shared repository layer.

The service management layer can request the network management layer to provision the requested service configuration determined by the network service layer. The network management layer can query the information from the shared repository and provision the network element 14 directly using the configuration information, or via the network element management layer. In other embodiments, the network management layer can merely notify the network element management layer overseeing the network element 14 of new configuration information in the shared repository. The network element management layer can query the shared repository to determine the new configuration information and provision the network element 14, accordingly.

Figs. 3c & 3d do not show the network element layer communicating directly with the shared repository. However, the network element layer can be configured to directly send information to and access information from the shared repository. In the prior example, the network element management layer can merely provide notice to the network element layer to retrieve new configuration information from the shared repository. Similarly, the network element management layer can request that the network element layer provide current status and configuration information directly to the shared repository. Also, less than all of the layers can directly access the shared repository.

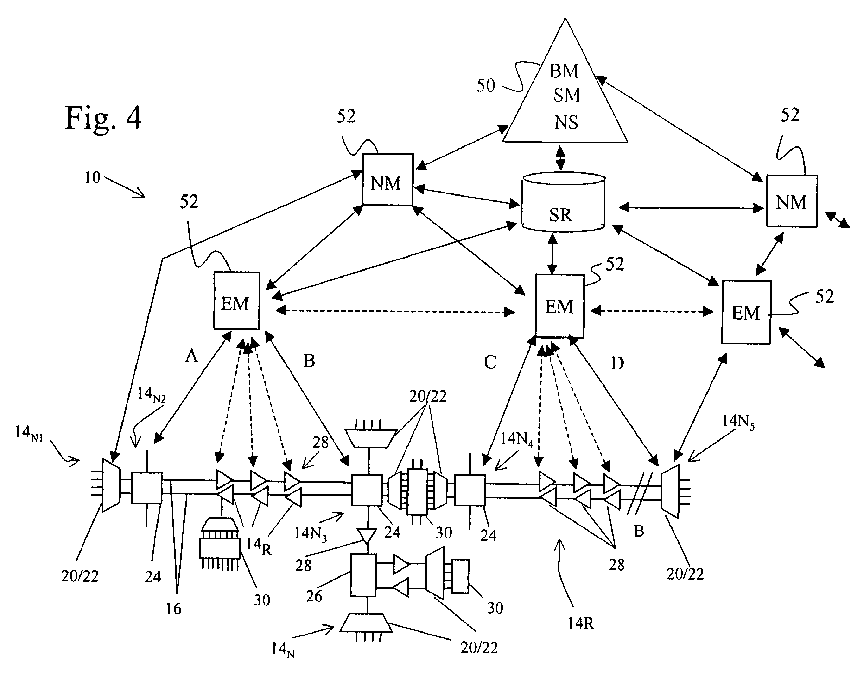

Fig. 4 is a block diagram illustrating one embodiment of a system 10 according to the present invention. The various layers of the network management structure can be embodied as one or more of hardware, software, and firmware in the system 10. For example, the business management layer, service management layer, and network service layer can be embodied as one or more processors 50, which may be centrally located or distributed. Software and/or firmware for those layers can be located on the same or separate processors 50 and can be executed simultaneously or individually, as needed. The combination of one or more of hardware, software, and firmware embodying the business management layer, service management layer, and network service layer can be referred to as the business manager (BM), service manager (SM), and NS manager, respectively. There can be one or more of each of the business manager, service manager, and NS manager, and they can be located together or they can be distributed.

The network management and network element management layers can be embodied on one or more processors 52, which can be remote from the central processor 50. The combination of one or more of hardware, software, and firmware embodying the network management and network element management layers can be referred to as the network manager (NM) and element manager (EM), respectively. The network and element managers can be located remotely from the network elements 14 and communicate via a data communication network external to the optical system 10. Alternatively, a portion of all of the network and/or element managers can be collated with or resident in the network element 14N that they directly control. In the collocated scenario, communication with other network elements can be provided entirely through the optical system 10 and/or an external data communication network. The shared repository can be physically located with one or more of the processors 50, 52, or it can be located remote from the processors 50, 52, or it can be distributed over several locations.

The network managers oversee the provisioning of the network to provide the requested services via the network configuration and wavelength plan developed by the network service manager. The network managers develop network element 14 instructions to provision the network and provide the instructions via one or more element managers and/or directly to the network elements 14.

The element managers 52 communicate directly with network element nodes 14N, and communicate indirectly with remote network elements 14R, such as via the network element nodes 14N and the optical communication paths 16. In Fig. 4 communication between the element managers 52 and the network elements 14 is illustrated using an external communication network, such as a WAN or other data communication network. Direct communication is illustrated in solid lines and indirect communication (e.g., communication via one or more other nodes or elements) is illustrated in broken lines. In addition, depending upon the size of the network and the number of network elements being controlled, the network manager and element manager can share processors 52 or even be collapsed into a single management layer.

In various embodiments, it might be desirable from a network management standpoint to connect each network element 14 directly to at least one element manager. However, the infrastructure cost of wide area network reaching each network element 14 can be prohibitive in large networks. An additional difficulty with having the element managers directly addressing each network element 14 is the need to assign a public Internet Protocol ("IP") address to each network element 14. As the optical system 10 increases in size, the tracking of IP addresses for each network element 14 increases system overhead.

Another benefit of using a combination of network element nodes 14N and remote network elements 14R is a reduction in the number of entry points into the system 10. Thus, network security demands and expenses are decreased, because encryption technologies, e.g., encoding, digital wrapping, etc., or other security measures only have to be deployed at the node elements 14N. Communications with the remote network element 14R can be tunneled through the external systems into the optical system 10 at the node elements 14N.

In some embodiments of the present invention, the network element nodes 14N are assigned IP addresses, e.g., 172.... Whereas, the remote network elements 14R are assigned internal optical system addresses that are relevant only within the optical system 10. The internal addresses can be "IP-like" in structure, or can follow other standard or proprietary formats. In those embodiments, communication between the element managers 52 and the remote network elements 14R in the system 10 can occur via one or more network element nodes 14N. For example, the network element nodes 14N can be configured to read a series of characters in the payload section of an information packet addressed to the network element node 14N as a destination address for the remainder of the payload information. The network element node 14N receiving the information packet can strip away the address information and forward the information based on the payload address. The payload address can be a dedicated section of the payload, e.g., the first 8 characters, have an identifier string that can be detected in the payload, or can be included in the overhead of the network element 14 node address.

In various embodiments, the payload address can be an internal optical system address for a remote network element 14R or an IP address of another network element node 14N. The network element nodes 14N can strip away the address information and forward the information based upon the payload address, so that multiple payload addresses can be concatenated in the payload information. In addition, if the payload address is an IP address, the network element node 14N can forward the information via the optical system or any external system to which it is connected.

The communication between the remote network elements 14R and the node network elements 14N can be performed in a number of ways. In various embodiments, remote network element 14R can be allocated specific timeslots in a dedicated supervisory or, alternatively, a mixed supervisory/payload data channel ("MDC") being transmitted along the communication path 16. Information destined for each remote network element 14R can be merely inserted into or removed from the appropriate timeslot of the channel by the node network elements 14N and remote network element 14R, without the need for any addressing within the system 10. Alternatively, information including the IP-like address identifiers can be inserted in any number of allocated timeslots in the channel. In the latter embodiments, the remote network elements 14R will have to find the identifiers to locate the information within the allocated timeslots. Likewise, the remote network elements 14R will have to attach its IP-like address to information being sent to the node network elements 14N.

Remote network elements 14R generally are located along optical links between two node network elements 14N. It is therefore possible, in many instances, to transmit information to the remote network elements 14R from either or both of the node network element 14N. Transmitting information to the remote network elements 14R via both node network elements 14N can be used, for example, for verification of instructions at the remote network elements 14R, such as when non-verification protocols are used to transmit the information.

In non-verification protocols, such as SNMP, the element manager can perform non-handshake verification by comparing the status information provided by the network elements 14 to the element manager profile of the network element 14 that reflects the most recent settings provided to the network element 14. Discrepancies in the status settings and the element manager setpoints can used as a basis for rerouting the information being sent from the element manager to a network element 14 through a different node network element 14N. Discrepancies in the settings can be further correlated against the node network element 14N from which the information was sent to determine network problems with the primary and/or secondary paths from the element manager to the network element 14.

Alternatively, one of the network element nodes 14N at the edge of a group of remote network elements 14R can be designated as a primary/working gateway for transmitting information to the remote network elements 14R. The other network element nodes 14N can be designated as a secondary/protection gateway to the remote network elements 14R. See, for example, paths A&B and C&D in Fig. 4, which provide alternative communication paths through multiple network element node 14N gateways to the remote network elements 14R. The network elements 14 can be configured to send notification back to the element manager upon receiving information. The notification can be in the form of a dedicated notice or as part of status information reporting. If the element manager does not receive verification that the information was received and implemented by the remote network element 14R, the element manager can resend the information via the secondary path to the remote network elements 14R. As will be further discussed, the element manager can be configured to send the information destined for a particular remote network element 14R via any node network element 14N. However, it will be appreciated that sending the information from the element manager to node network elements 14N other than in the links containing the particular remote network element 14R can introduce increased latencies into the network management system 12.

In various embodiments, it is desirable to provide node network element 14N to node network element 14N communication within the system 10. For example, timeslots in the mixed data channel can be allocated to provide dedicated communication between the node network elements 14N. The allocated node to node timeslots are not processed at each remote network element 14R, but are removed at a subsequent node network element 14N. Each subsequent node network element 14N can read and process the information accordingly or pass the information along to subsequent network element nodes 14N. Node to node communication can be used to synchronize network functions and to quickly disseminate fault conditions that require immediate action, such as a protection switch.

Alternatively, information destined for any node network element 14N can be via either the mixed data channel or one or more dedicated communication traffic optical channel in the system 10. In these embodiments, the network element nodes 14N can process the mixed data channel similar to the remote network elements facilitating the formation of a mixed data network. If, for example, link A is down in the EM/NM network, disabling communication between the element manager 52 and node network element 14N₂, the element manager 52 can send the information through link B to node network element 14N₃. When network element 14N₃ receives the information from the element manager 52, it can either insert the information in the node to node communication or payload timeslots in the mixed data channel. The network element 14N₃ also can send the information through the dedicated communication traffic channels to the node network element 14₂.

In various embodiments, electronic switching and routing equipment 30, such as IP and ATM routers, can be provided at one or both of the remote network elements 14R and the network element nodes 14N. Thus, when a mixed data channel is used, communications traffic can be routed via the mixed data channel directly to and from remote element 14R locations in the system 10. The use of a mixed data channel allows for add/drop payload access to the optical system 10 at every remote network element 14R. This remote add/drop access can be used to provide aggregation and dissemination of low capacity traffic. Dedicated payload channels can also be used to provide access to the remote network elements. In some instances, it may be desirable to provide a public IP address to a remote network element 14 that provides an access and egress to the system 10, although the public IP address is not required. The public IP address allows external communication systems to identify the network element 14 as an access/egress point for transmitting communications traffic on the mixed data channel through the system 10.

The multi-dimensional communication aspects of the network management system 12 also provides increased functionality to correlate various alarms generated by the network element 14, as well as the network element management layer, to determine the status of the network elements 14. The correlation of alarms to identify one or more events becomes increasingly difficult as the system 10 increases in size. In the present invention, the network management systems 12 can perform fully and semi-automatic event correlation template generation. The element manager and element manager can be configured to record alarms that are generated as a result of events in the system 10. The alarms are compiled and can be sequenced if the protocol includes generation and/or receipt time stamping. Because alarms have multiple paths to communicate with the element manager and network manager, the various alarms generated can be used to more precisely identify the source of the problem resulting in the alarms. The particular event that produces the alarm listing can be manually associated with the alarms and/or association can be automatically performed by the network management system 12, as will be further described.

In addition, the network manager and element manager systems can be configured to initiate alarm triggering events and compile alarm listing profiles generated as a result of the event. The ability to control alarm triggering events is particularly useful as network complexity increases. For example, the network management system 12 can be configured to perform automatic template generation during system shakedown, maintenance, upgrade, and to a lesser extent during normal operations. Generation of the alarm listing and associated triggering events using the installed system allows specifically tailored templates to be developed, thereby increasing the likelihood of successful event correlation by the network management system 12 during future operation.

The use of the system 10 to generate specifically tailored templates can also provide information of the expected types and sequence of the alarms being generated. For example, a loss of signal alarm from a processor monitoring a photodiode could be indicative of a fiber cut or a failed photodiode. However, if an optical switch also sends an alarm indicating an unexpected decrease in the number of signal channels propagating through the switch, the network manager can quickly identify the fault as involving the transmitter 20. The tracking of the alarm types and the location of the alarms can be used to provide a service view of the alarms and the identification of probable causes for the alarms on a service view of the network. It will be appreciated that network management system 12 embodiments employing shared repositories can provide integrated access to network alarms that can greatly enhance the event tracking and correlation capabilities of the system 10.

The generated alarms can include a time stamp, and the element manager and network manager can use the time stamp to develop an alarm sequence template. The time of receipt of the alarms by the element manager and network manager can provide some information on the expected latencies from the network elements 14. While time of receipt by the element manager and network manager is useful in theory, the latencies can vary depending on traffic loading in the network and other factors, all of which can render the time of receipt information unreliable.

The alarm time stamp can be synchronized at each network element 14 and the element managers and network managers, for example, by using a global positioning system clock. The alarm time stamp would provide the alarm sequence and the propagation of alarm triggering events, when compared to a test bed alarm sequence. The propagation of the alarms can also be used to aid in the identification of alarm triggering events that do not correlate with existing templates.

Although the present invention will be described with respect to the telecommunications management network hierarchical structure, advantages of the present invention can be realized with and applied to other management structures. Those of ordinary skill in the art will recognize that many modifications and variations of the present invention may be implemented. The foregoing description and the following claims are intended to cover all such modifications and variations.

## Claims

1. A network management system (12) comprising:
at least one of a service manager (50) and a business manager (50) configured to request communication services through at least one network;
a network service manager adapted to determine communication paths (16) through the at least one network to enable delivery of the requested communication services; and,
a network manager (52) adapted to provision network elements within the at least one network to deliver the requested communication services along the determined communication paths (16);
a plurality of element managers (52) adapted to receive network element (14) instructions from said network manager (52) and control said network elements according to the network element (14) instructions;
wherein: each of said network elements (14) includes a network element controller adapted to receive network element (14) instructions from at least one of said element managers (52) and control network elements (14) using the network element instructions;
said network elements (14) include network element nodes (14N) and remote network elements (14R);
said element managers (52) directly communicate with network element nodes (14N) and communicate with said remote network elements (14R) via said network element nodes (14N);
said network element nodes (14N) communicate with said remote elements (14R) via said communication paths (16),
said network element nodes (14N) are identified individually by public internet protocol addresses, **characterized in that** said remote network elements (14R) are identified by internal optical system addresses;
said element managers (52) are adapted to communicate instructions to remote network elements (14R) by including a destination address for remote network elements to be instructed within messages sent to the network element nodes (14N); and,
said network element nodes (14N) are adapted to receive messages from said element managers (52), remove the destination addresses and instructions, and communicate the instructions to said remote network elements (14R) at the destination address.

2. The network management system of claim 1, wherein said element managers (52) are adapted to communicate instructions to network element nodes (14N) by including the public internet protocol address as the destination address within messages sent to other network element nodes (14N).

3. The network management system of claim 1, wherein:
said element managers (52) are adapted to communicate instructions to remote network elements (14R) via at least two network element nodes (14N); and,
said network elements (14) are configured to disregard redundant messages received from said at least two network element nodes (14N).

4. The network management system of claim 1, wherein said network elements (14) are adapted to communicate network element information to at least one element manager (52).

5. The network management system of claim 1, wherein said remote network elements (14R) are adapted to communicate network element information to at least one element manager (52) via a plurality of network element nodes (14N).

6. The network management system of claim 1, wherein at least one of said remote network elements (14R) is adapted to communicate payload information with at least one other network element (14) via a communications path (16) in said network.

7. The network management system of claim 1, wherein said network services manager determines whether network elements (14) can be adapted to deliver the requested services and communicate the determination to said service manager.

8. The network management system of claim 1 adapted to an optical communication system comprising:
at least one network having a plurality of network elements (14) including optical transmitters adapted to transmit information as optical signal via communication paths (16) to optical receivers adapted to receive the information from said communications path (16).

9. The network management system of claim 8, wherein:
said network elements (14) include optical and electrical switches and add/drop multiplexers; and,
said network manager is adapted to control said optical and electrical switches and add/drop multiplexers to establish communication paths (16) between said transmitters (20) and receivers.

10. A method of providing communication services in a network comprising:
requesting communication services through a network from a service management layer to a network service management layer;
determining communication paths (16) through the network that will be used by the requested communication services in the network service management layer and providing the determined communication paths (16) to a network management layer;
configuring network elements (14) within the network via the network management layer to deliver the requested communication services along the determined communication paths (16), wherein each of said network elements (14) includes a network element controller configured to receive network element instructions from at least one of said element managers and control network elements using the network element instructions, said network elements including network element nodes (14N) and remote network elements (14R);
establishing direct communication between said element managers and network element nodes (14N), and between said element managers and said remote network elements (14R) via network element nodes (14N);
establishing communication between said network element nodes (14N) and said remote elements (14R) via said communication paths (16);
identifying individually said network element nodes (14N) by public internet protocol addresses, and said remote network elements (14R) by internal optical system addresses;
configuring said element managers to communicate instructions to remote network elements (14R) by including a destination address for remote network elements (14R) to be instructed within messages sent to the network element nodes (14N); and,
configuring said network element nodes (14N) to receive messages from said element managers (52), remove the destination addresses and instructions, and communicate the instructions to said remote network elements (14R) at the destination address.

11. The method of claim 10, wherein said determining includes:
identifying network element (14) configurations required to deliver the requested communication services; and,
supplying the identified network element (14) configurations to the network management layer.

12. The method of claim 11, further comprising:
providing network element (14) configuration information from the network management layer to a plurality of element managers (52) overseeing the network elements (14); and,
communicating network element configuration information between the plurality of element managers (52) and network element controllers included in the network elements (14).

13. The method of claim 12, wherein said communicating includes communicating network element (14) configuration information directly to network element nodes (14N) and to remote network elements (14R) via the network element nodes (14N).

14. The method of claim 13, wherein said communicating includes establishing external internet protocol addresses for the network element nodes (14N) and internal system addresses for the remote network elements (14R) and configuring the network element nodes (14N), said network element nodes extract the internal system addresses and configuration information and forward the configuration information to the remote network elements (14R) at the internal system addresses.

## Patentansprüche

1. Netzmanagementsystem (12), umfassend:
wenigstens einen von einem Dienstemanager (50) und einem Geschäftsmanager (50), der so konfiguriert ist, dass er Kommunikationsdienste durch wenigstens ein Netz anfordert;
einen Netzdienstemanager, der so ausgelegt ist, dass er Kommunikationspfade (16) durch das wenigstens eine Netz bestimmt, um eine Zustellung der angeforderten Kommunikationsdienste zu ermöglichen; und
einen Netzmanager (52), der so ausgelegt ist, dass er Netzelemente innerhalb des wenigstens einen Netzes bereitstellt, um die angeforderten Kommunikationsdienste entlang der bestimmten Kommunikationspfade (16) zuzustellen;
eine Mehrzahl von Elementmanagern (52), die so ausgelegt sind, dass sie Netzelement (14)-Anweisungen vom Netzmanager (52) empfangen und die Netzelemente gemäß den Netzelement (14)-Anweisungen steuern;
wobei jedes der Netzelemente (14) eine Netzelementsteuerung umfasst, die so ausgelegt ist, dass sie Netzelement (14)-Anweisungen von wenigstens einem der Elementmanager (52) empfängt und Netzelemente (14) unter Verwendung der Netzelementanweisungen steuert;
die Netzelemente (14) Netzelementknoten (14N) und entfernte Netzelemente (14R) umfassen;
die Elementmanager (52) mit Netzelementknoten (14N) direkt kommunizieren und mit den entfernen Netzelementen (14R) über die Netzelementknoten (14N) kommunizieren;
die Netzelementknoten (14N) mit den entfernten Elementen (14R) über die Kommunikationspfade (16) kommunizieren;
die Netzelementknoten (14N) durch öffentliche Internetprotokolladressen individuell ausgewiesen sind, **dadurch gekennzeichnet, dass** die entfernten Netzelemente (14R) durch interne optische Systemadressen ausgewiesen sind;
die Elementmanager (52) so ausgelegt sind, dass sie entfernten Netzelementen (14R) Anweisungen kommunizieren, indem sie eine Zieladresse für anzuweisende entfernte Netzelemente in Nachrichten aufnehmen, die an die Netzelementknoten (14N) gesendet werden; und
die Netzelementknoten (14N) so ausgelegt sind, dass sie Nachrichten von den Netzmanagern (52) empfangen, die Zieladressen und Anweisungen entfernen, und die Anweisungen den entfernten Netzelementen (14R) an der Zieladresse kommunizieren.

2. Netzmanagementsystem nach Anspruch 1, wobei die Elementmanager (52) so ausgelegt sind, dass sie Netzelementknoten (14N) Anweisungen kommunizieren, indem sie die öffentliche Internetprotokolladresse als Zieladresse in Nachrichten aufnehmen, die an andere Netzelementknoten (14N) gesendet werden.

3. Netzmanagementsystem nach Anspruch 1, wobei:
die Elementmanager (52) so ausgelegt sind, dass sie entfernten Netzelementen (14R) über wenigstens zwei Netzelementknoten (14N) Anweisungen kommunizieren; und
die Netzelemente (14) so konfiguriert sind, dass sie redundante Nachrichten ignorieren, die von den wenigstens zwei Netzelementknoten (14N) empfangen werden.

4. Netzmanagementsystem nach Anspruch 1, wobei die Netzelemente (14) so ausgelegt sind, dass sie wenigstens einem Elementmanager (52) Netzelementinformationen kommunizieren.

5. Netzmanagementsystem nach Anspruch 1, wobei die entfernten Netzelemente (14R) so ausgelegt sind, dass sie wenigstens einem Elementmanager (52) über eine Mehrzahl von Netzelementknoten (14N) Netzelementinformationen kommunizieren.

6. Netzmanagementsystem nach Anspruch 1, wobei wenigstens eines der entfernten Netzelemente (14R) so ausgelegt ist, dass es Nutzlastinformationen mit wenigstens einem anderen Netzelement (14) über einen Kommunikationspfad (16) in dem Netz kommuniziert.

7. Netzmanagementsystem nach Anspruch 1, wobei der Netzdienstemanager bestimmt, ob Netzelemente (14) angepasst werden können, um die angeforderten Dienste zuzustellen, und die Bestimmung dem Dienstemanager kommuniziert.

8. Netzmanagementsystem nach Anspruch 1, angepasst an ein optisches Kommunikationssystem, umfassend:
wenigstens ein Netz mit einer Mehrzahl von Netzelementen (14), umfassend optische Sender, die so ausgelegt sind, dass sie Informationen als optisches Signal über Kommunikationspfade (16) an optische Empfänger senden, die so ausgelegt sind, dass sie die Informationen von den Kommunikationspfaden (16) empfangen.

9. Netzmanagementsystem nach Anspruch 8, wobei:
die Netzelemente (14) optische und elektrische Schalter und Add-/Drop-Multiplexer umfassen; und
der Netzmanager so ausgelegt ist, dass er die optischen und elektrischen Schalter und Add-/Drop-Multiplexer steuert, um Kommunikationspfade (16) zwischen den Sendern (20) und Empfängern aufzubauen.

10. Verfahren zur Bereitstellung von Kommunikationsdiensten in einem Netz, umfassend:
Anfordern von Kommunikationsdiensten durch ein Netz von einer Dienstemanagementschicht bei einer Netzdienstemanagementschicht;
Bestimmen von Kommunikationspfaden (16) durch das Netz, die durch die angeforderten Kommunikationsdienste verwendet werden, in der Netzdienstemanagementschicht und Bereitstellen der bestimmten Kommunikationspfade (16) für eine Netzmanagementschicht;
derartiges Konfigurieren von Netzelementen (14) innerhalb des Netzes über die Netzmanagementschicht, dass sie die angeforderten Kommunikationsdienste entlang der bestimmten Kommunikationspfade (16) zustellen, wobei jedes der Netzelemente (14) eine Netzelementsteuerung umfasst, die so konfiguriert ist, dass sie Netzelementanweisungen von wenigstens einem der Elementmanager empfängt und Netzelemente unter Verwendung der Netzelementanweisungen steuert, wobei die Netzelemente Netzelementknoten (14N) und entfernte Netzelemente (14R) umfassen;
Aufbauen von direkter Kommunikation zwischen den Elementmanagern und Netzelementknoten (14N) und zwischen den Elementmanagern und den entfernten Netzelementen (14R) über Netzelementknoten (14N);
Aufbauen von Kommunikation zwischen den Netzelementknoten (14N) und den entfernten Netzelementen (14R) über die Kommunikationspfade (16);
individuelles Identifizieren der Netzelementknoten (14N) durch öffentliche Internetprotokolladressen und der entfernten Netzelemente (14R) durch interne optische Systemadressen;
derartiges Konfigurieren der Elementmanager, dass sie entfernten Netzelementen (14R) Anweisungen kommunizieren, indem sie eine Zieladresse für anzuweisende entfernte Netzelemente (14R) in Nachrichten aufnehmen, die an die Netzelementknoten (14N) gesendet werden; und
derartiges Konfigurieren der Netzelementknoten (14N), dass sie Nachrichten von den Elementmanagern (52) empfangen, die Zieladressen und Anweisungen entfernen, und die Anweisungen den entfernten Netzelementen (14R) an der Zieladresse kommunizieren.

11. Verfahren nach Anspruch 10, wobei das Bestimmen umfasst:
Identifizieren von Netzelement (14)-Konfigurationen, die zum Zustellen der angeforderten Kommunikationsdienste erforderlich sind; und
Zuführen der identifizierten Netzelement (14)-Konfigurationen zur Netzmanagementschicht.

12. Verfahren nach Anspruch 11, ferner umfassend:
Liefern von Netzelement (14)-Konfigurationsinformationen von der Netzmanagementschicht an eine Mehrzahl von Elementmanagern (52), welche die Netzelemente (14) beaufsichtigen; und
Kommunizieren von Netzelementkonfigurations-Informationen zwischen der Mehrzahl von Elementmanagern (52) und Netzelementsteuerungen, die in den Netzelementen (14) enthalten sind.

13. Verfahren nach Anspruch 12, wobei das Kommunizieren ein Kommunizieren von Netzelement (14)-Konfigurationsinformationen an Netzelementknoten (14N) direkt und an entfernte Netzelemente (14R) über die Netzelementknoten (14N) umfasst.

14. Verfahren nach Anspruch 13, wobei das Kommunizieren ein Festlegen von externen Internetprotokolladressen für die Netzelementknoten (14N) und internen Systemadressen für die entfernten Netzelemente (14R) und Konfigurieren der Netzelementknoten (14N) umfasst, wobei die Netzelementknoten die internen Systemadressen und Konfigurationsinformationen extrahieren und die Konfigurationsinformationen an die entfernten Netzelemente (14R) an den internen Systemadressen weiterleiten.

## Revendications

1. Système de gestion de réseau (12) comprenant :
au moins un d'un gestionnaire de services (50) et d'un gestionnaire d'affaires (50) configuré pour demander des services de communication par l'intermédiaire d'au moins un réseau ;
un gestionnaire de services de réseau adapté pour déterminer des trajets de communication (16) par l'intermédiaire du au moins un réseau pour permettre la remise des services de communication demandés ; et
un gestionnaire de réseau (52) adapté pour fournir des éléments de réseau à l'intérieur du au moins un réseau afin de remettre les services de communication demandés le long des trajets de communication déterminés (16) ;
une pluralité de gestionnaires d'éléments (52) adaptés pour recevoir des instructions d'éléments de réseau (14) en provenance dudit gestionnaire de réseau (52) et contrôler lesdits éléments de réseau selon les instructions d'éléments de réseau (14) ;
dans lequel :
chacun desdits éléments de réseau (14) inclut un contrôleur d'élément de réseau adapté pour recevoir des instructions d'éléments de réseau (14) en provenance d'au moins un desdits gestionnaires d'éléments (52) et contrôler les éléments de réseau (14) en utilisant les instructions d'éléments de réseau (14) ;
lesdits éléments de réseau (14) incluent des noeuds d'éléments de réseau (14N) et des éléments de réseau distants (14R) ;
lesdits gestionnaires d'éléments (52) communiquent directement avec les noeuds d'éléments de réseau (14N) et communiquent avec lesdits éléments de réseau distants (14R) via lesdits noeuds d'éléments de réseau (14N) ;
lesdits noeuds d'éléments de réseau (14N) communiquent avec lesdits éléments distants (14R) via lesdits trajets de communication (16),
lesdits noeuds d'éléments de réseau (14N) sont identifiés individuellement par des adresses de protocole Internet publiques, **caractérisé en ce que** lesdits éléments de réseau distants (14R) sont identifiés par des adresses de système optique internes ;
lesdits gestionnaires d'éléments (52) sont adaptés pour communiquer des instructions à des éléments de réseau distants (14R) en incluant une adresse de destination pour des éléments de réseau distants devant faire l'objet d'instructions à l'intérieur de messages envoyés aux noeuds d'éléments de réseau (14N) ; et,
lesdits noeuds d'éléments de réseau (14N) sont adaptés pour recevoir des messages en provenance desdits gestionnaires d'éléments (52), enlever les adresses de destination et les instructions, et communiquer les instructions auxdits éléments de réseau distants (14R) à l'adresse de destination.

2. Système de gestion de réseau selon la revendication 1, dans lequel lesdits gestionnaires d'éléments (52) sont adaptés pour communiquer des instructions à des noeuds d'éléments de réseau (14N) en incluant l'adresse de protocole Internet publique en tant qu'adresse de destination à l'intérieur de messages envoyés à d'autres noeuds d'éléments de réseau (14N).

3. Système de gestion de réseau selon la revendication 1, dans lequel :
lesdits gestionnaires d'éléments (52) sont adaptés pour communiquer des instructions à des éléments de réseau distants (14R) via au moins deux noeuds d'éléments de réseau (14N) ; et,
lesdits éléments de réseau (14) sont configurés pour ignorer des messages redondants reçus desdits au moins deux noeuds d'éléments de réseau (14N).

4. Système de gestion de réseau selon la revendication 1, dans lequel lesdits éléments de réseau (14) sont adaptés pour communiquer des informations d'élément de réseau à au moins un gestionnaire d'élément (52).

5. Système de gestion de réseau selon la revendication 1, dans lequel lesdits éléments de réseau distants (14R) sont adaptés pour communiquer des informatisons d'élément de réseau à au moins un gestionnaire d'élément (52) via une pluralité de noeuds d'éléments de réseau (14N).

6. Système de gestion de réseau selon la revendication 1, dans lequel au moins un desdits éléments de réseau distants (14R) est adapté pour communiquer des informations de charge utile avec au moins un autre élément de réseau (14) via un trajet de communication (16) dans ledit réseau.

7. Système de gestion de réseau selon la revendication 1, dans lequel ledit gestionnaire de services de réseau détermine si des éléments de réseau (14) peuvent être adaptés pour remettre les services demandés et communiquer la détermination audit gestionnaire de services.

8. Système de gestion de réseau selon la revendication 1 adapté à un système de communication optique comprenant :
au moins un réseau ayant une pluralité d'éléments de réseau (14) incluant des émetteurs optiques adaptés pour transmettre des informations comme signal optique via des trajets de communication (16) à des récepteurs optiques adaptés pour recevoir les informations depuis lesdits trajets de communication (16).

9. Système de gestion de réseau selon la revendication 8, dans lequel :
lesdits éléments de réseau (14) incluent des commutateurs optiques et électriques et des multiplexeurs à insertion/extraction ; et,
ledit gestionnaire de réseau est adapté pour contrôler lesdits commutateurs optiques et électriques et lesdits multiplexeurs à insertion/extraction afin d'établir des trajets de communication (16) entre lesdits émetteurs (20) et récepteurs.

10. Procédé de fourniture de services de communication dans un réseau comprenant :
la demande de services de communication par l'intermédiaire d'un réseau d'une couche de gestion de services à une couche de gestion de services de réseau ;
la détermination de trajets de communication (16) par l'intermédiaire du réseau qui seront utilisés par les services de communication demandés dans la couche de gestion de services de réseau et la fourniture des trajets de communication déterminés (16) à une couche de gestion de réseau ;
la configuration d'éléments de réseau (14) à l'intérieur du réseau via la couche de gestion de réseau afin de remettre les services de communication demandés le long des trajets de communication déterminés (16), où chacun desdits éléments de réseau (14) inclut un contrôleur d'élément de réseau configuré pour recevoir des instructions d'éléments de réseau en provenance d'au moins un desdits gestionnaires d'éléments et contrôler les éléments de réseau en utilisant les instructions d'éléments de réseau, lesdits éléments de réseau incluant des noeuds d'éléments de réseau (14N) et des éléments de réseau distants (14R) ;
l'établissement d'une communication directe entre lesdits gestionnaires d'éléments et lesdits noeuds d'éléments de réseau (14N), et entre lesdits gestionnaires d'éléments et lesdits éléments de réseau distants (14R) via les noeuds d'éléments de réseau (14N) ;
l'établissement d'une communication entre lesdits noeuds d'éléments de réseau (14N) et lesdits éléments distants (14R) via lesdits trajets de communication (16) ;
l'identification individuelle desdits noeuds d'éléments de réseau (14N) par des adresses de protocole Internet publiques, et desdits éléments de réseau distants (14R) par des adresses de système optique internes ;
la configuration desdits gestionnaires d'éléments pour communiquer des instructions à des éléments de réseau distants (14R) en incluant une adresse de destination pour des éléments de réseau distants (14R) devant faire l'objet d'instructions à l'intérieur de messages envoyés aux noeuds d'éléments de réseau (14N) ; et,
la configuration desdits noeuds d'éléments de réseau (14N) pour recevoir des messages en provenance desdits gestionnaires d'éléments (52), enlever les adresses de destination et les instructions, et communiquer les instructions auxdits éléments de réseau distants (14R) à l'adresse de destination.

11. Procédé selon la revendication 10, dans lequel ladite détermination inclut :
l'identification de configurations d'éléments de réseau (14) requises pour remettre les services de communication demandés ; et,
la fourniture des configurations d'éléments de réseau (14) identifiées à la couche de gestion de réseau.

12. Procédé selon la revendication 11, comprenant en outré :
la fourniture d'informations de configuration d'élément de réseau (14) de la couche de gestion de réseau à une pluralité de gestionnaires d'éléments (52) surveillant les éléments de réseau (14) ; et,
la communication d'informations de configuration d'élément de réseau entre la pluralité de gestionnaires d'éléments (52) et des contrôleurs d'éléments de réseau inclus dans les éléments de réseau (14).

13. Procédé selon la revendication 12, dans lequel ladite communication inclut la communication d'informations de configuration d'élément de réseau (14) directement à des noeuds d'éléments de réseau (14N) et à des éléments de réseau distants (14R) via les noeuds d'éléments de réseau (14N).

14. Procédé selon la revendication 13, dans lequel ladite communication inclut l'établissement d'adresses de protocole Internet externes pour les noeuds d'éléments de réseau (14N) et d'adresses de système internes pour les éléments de réseau distants (14R) et la configuration des noeuds d'éléments de réseau (14N), lesdits noeuds d'éléments de réseau extraient les adresses de système internes et les informations de configuration et transfèrent les informations de configuration aux éléments de réseau distants (14R) aux adresses de système internes.
